# EUROPEAN PATENT SPECIFICATION

(11) **EP 2 502 222 B1**
(45) Date of publication and mention of the grant of the patent: **29.08.2018**
(21) Application number: 09851520.8
(22) Date of filing: 18.11.2009
(51) Int. Cl.: H04N 13/00, H04N 19/597

(54) **METHODS AND SYSTEMS FOR THREE DIMENSIONAL CONTENT DELIVERY WITH FLEXIBLE DISPARITY SELECTION**
VERFAHREN UND SYSTEME ZUR DREIDIMENSIONALEN INHALTSLIEFERUNG MIT FLEXIBLER DISPARITÄTSAUSWAHL
PROCÉDÉS ET SYSTÈMES POUR L'ACHEMINEMENT DE CONTENUS TRIDIMENSIONNELS AVEC UNE SÉLECTION FLEXIBLE DE DISPARITÉS

(43) Date of publication of application: 26.09.2012
(73) Proprietor: Thomson Licensing, 92130 Issy-les-Moulineaux (FR)
(72) Inventor: BOYCE, Jill, MacDonald, Manalapan NJ 07726 (US); RAMASWAMY, Kumar, Princeton NJ 08540 (US); LLACH, Joan, Princeton NJ 08540 (US)
(74) Representative: Browaeys, Jean-Philippe
(86) International application number: PCT/US2009/006167
(87) International publication number: WO 2011/062572

(56) References cited:
- JP-A- 2004 289 527
- US-A1- 2005 190 180
- US-A1- 2006 262 856
- US-A1- 2007 081 716
- ILKWON PARK ET AL: "Interactive Multi-View Video Adaptation for 3DTV", 3DTV CONFERENCE: THE TRUE VISION - CAPTURE, TRANSMISSION AND DISPLAY OF 3D VIDEO, 2008, IEEE, PISCATAWAY, NJ, USA, 28 May 2008 (2008-05-28), pages 89-92, XP031275218, ISBN: 978-1-4244-1760-5
- MASAYUKI TANIMOTO ET AL: "Frameworks for FTV coding", PICTURE CODING SYMPOSIUM, 2009. PCS 2009, IEEE, PISCATAWAY, NJ, USA, 6 May 2009 (2009-05-06), pages 1-4, XP031491644, ISBN: 978-1-4244-4593-6

## Description

### TECHNICAL FIELD

The present invention generally relates to the transmission and display of three-dimensional content, and more particularly, to adjustment of disparity between views forming the three dimensional content.

### BACKGROUND

A three-dimensional image is formed by displaying images recorded or generated from different view points or perspectives of a scene or an object to each eye of a user: a right view is displayed to the right eye of a user while a left view is displayed to the left eye of a user. "Disparity" is the horizontal displacement between these two view points or perspectives. In particular, the disparity between two view points is what permits a viewer to perceive video content in three-dimensions; the higher the disparity, the higher the intensity of the three-dimensional effect in that the depth of the perceived image is greater.

Some of the existing methods for delivering three-dimensional (3D) stereo content use fixed disparity, such as, for example, anaglyph-based approaches used in package media and television broadcasts employing ColorCode 3D technology. These approaches have a minimal increase in complexity compared to traditional two-dimensional (2D) video delivery. However, they do not permit adjusting the disparity of the stereo content. As a result, they may provide a poor viewing experience. For example, if the disparity is too low, the 3D effect will be lost; conversely, if the disparity is too high, it may cause visual discomfort.

Other approaches, such as 2d+depth video format, deliver 3D video content by transmitting 2D video with depth information and generate the stereo pair (left & right views) on the receiver side. While this approach permits adjusting the disparity on-the-fly using views generated at the receiver, it greatly increases the complexity and cost of the receiver. Additionally, because the second view has to be interpolated from the 2D video, the resulting 3D image may have visual artifacts, especially around large, foreground objects.

Other known methods are based on 3D models, such as, for example, Nvidia 3D Vision. Similar to the previous approaches based on 2D + depth, these 3D model-based methods generate the 3D stereo pair on the receiver side, but do not introduce video artifacts, as the complete 3D model of the scene is available. Requiring a complete 3D model of the scene is the main limitation of these methods because it greatly increases complexity and limits their application to video games, which are already based on 3D models.

As noted above, the intensity of the 3D effect depends on the disparity of views displayed. The intensity also depends on the viewing conditions, such as screen size and viewing distance, and the response of the visual system of each viewer. Thus, the disparity of the 3D stereo content should be adjusted to fit the viewer and the viewing conditions.

Ilkwon Part et al: "Interactive multi-view video adaptation for 3DTV", 3DTV CONFERENCE: THE TRUE VISION-CAPTURE? TRANSMISSION AND DISPLAY OF 3D VIDEO, 2008, IEEE, PISCATAWAY, NJ, USA, 28 May 2008 (2008_05_28) pages 89-92 presents descriptions related to user preferences for multi-view video presentation.

Japanese Patent Application from Sanyo Electric CO published as JP2004289527A on 1.4^{th} October 2004 presents a method to display stereo content, wherein a range of parallax amount is determined for a user, and pair of views are selected at the receiver according the determined range.

### SUMMARY

Accordingly, there is a need for efficient and low-complexity methods and systems for delivering 3D stereo content that permits adjusting the disparity of the content and, at the same time, maintains high visual quality. Methods and systems in accordance with various exemplary embodiments are presented that address current deficiencies by enabling dynamic selection and adjustment of the disparity of views for three-dimensional content. This provides low complexity and does not require the use of 3D models. In addition, Multi-view Video Coding (MVC) schemes can be utilized, which permit the transmission of views of three-dimensional content in a quick and efficient manner. The MVC schemes facilitate dynamic selection and adjustment of disparity by configuring dependencies of enhancement views to reference only base views.

In one exemplary embodiment, a method for delivering three-dimensional media content over a network includes: storing a plurality of different views for the content, wherein different stereo pair combinations of the views yield different disparities; receiving a request from a receiver to transmit at least one stereo pair of the stored plurality of different views with a corresponding disparity, wherein the disparity is selected at the receiver; selecting at least one stereo pair of the stored plurality of different views having the selected disparity; and transmitting the at least one pair of views having the selected disparity to the receiver over the network in response to receiving the request.

In an alternate exemplary embodiment, a method for receiving three-dimensional media content over a network includes: selecting a disparity for the three-dimensional content; transmitting to a server a request for at least one stereo pair of views having the selected disparity; and receiving the at least one stereo pair of views having the selected disparity over the network.

In another exemplary embodiment, a system for delivering three-dimensional media content over a broadcast network includes: a server configured to implement the method of claim 1 to store and broadcast a plurality of different views for the content, wherein different stereo pair combinations of the views yield different disparities; and a receiver configured to implement the method of claim 7 receive the plurality of different views, select a disparity for the content and output a stereo pair of the views having the selected disparity for display.

In a different exemplary embodiment, a method for delivering three-dimensional media content over a network by employing Multi-view Video Coding includes: receiving a base view and a plurality of enhancement views for the content, wherein different combinations of the base view and the enhancement views yield different disparities; MVC encoding the base view and the enhancement views such that the enhancement views reference the base view without referencing any other enhancement view; and transmitting at least one pair of the MVC encoded views to a receiver, wherein the base view is included in the at least one pair.

### BRIEF DESCRIPTION OF THE DRAWINGS

The teachings of the present invention can be readily understood by considering the following detailed description in conjunction with the accompanying drawings, in which:
FIG. 1 is a block/flow diagram of a method for delivering three-dimensional media content over a network in accordance with exemplary embodiments of the present invention.
FIG. 2 is a block/flow diagram of a method for receiving three-dimensional media content over a network in accordance with exemplary embodiments of the present invention; and
FIG. 3 is a block/flow diagram of a system for delivering three-dimensional media content over a network in accordance with exemplary embodiments of the present invention.
FIG. 4 is a block/flow diagram of a method for delivering three-dimensional media content over a broadcast network in accordance with other exemplary embodiments of the present invention.
FIG. 5 is a block/flow diagram of a method for receiving three-dimensional media content over a broadcast network in accordance with other exemplary embodiments of the present invention.
FIG. 6 is a block/flow diagram of a more specific system for delivering three-dimensional media content over a network using Multi-view Video Coding (MVC) techniques in accordance with exemplary embodiments of the present invention.
FIG. 7 is a block/flow diagram of a method for delivering three-dimensional media content over a network by employing Multi-view Video Coding in accordance with exemplary embodiments of the present invention.
FIG. 8 is a graph illustrating interpolation of enhancement views in accordance with exemplary embodiments of the present invention.
FIG. 9 is a block/flow diagram of an MVC encoding system/method illustrating encoding of base views and enhancement views in accordance with exemplary embodiments of the present invention.
FIG. 10 is a graph illustrating dependency relationships between enhancement views and base views in accordance with exemplary embodiments of the present invention.

It should be understood that the drawings are for purposes of illustrating the concepts of the invention and are not necessarily the only possible configuration for illustrating the invention. To facilitate understanding, identical reference numerals have been used, where possible, to designate identical elements that are common to the figures.

### DETAILED DESCRIPTION

Exemplary embodiments provide methods and systems for delivering three-dimensional stereo content that permit disparity adjustment by enabling users or receivers to select among several pairs of left & right views. The proposed embodiments can customize the 3D experience to fit the preferences of the viewer and the viewing conditions, such as screen size and viewing distance, without reducing the image video quality or significantly increasing the complexity of the receiver and display.

It should be understood that the functions of the various elements shown in the figures can be provided through the use of dedicated hardware as well as hardware capable of executing software in association with appropriate software. When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read-only memory ("ROM") for storing software, random access memory ("RAM"), and non-volatile storage. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future (i.e., any elements developed that perform the same function, regardless of structure).

Thus, for example, it will be appreciated by those skilled in the art that the block diagrams presented herein represent conceptual views of illustrative system components and/or circuitry embodying the principles of the invention. Similarly, it will be appreciated that any flow charts, flow diagrams, state transition diagrams, pseudocode, and the like represent various processes which can be substantially represented in computer readable storage media and so executed by a computer or processor, whether or not such computer or processor is explicitly shown.

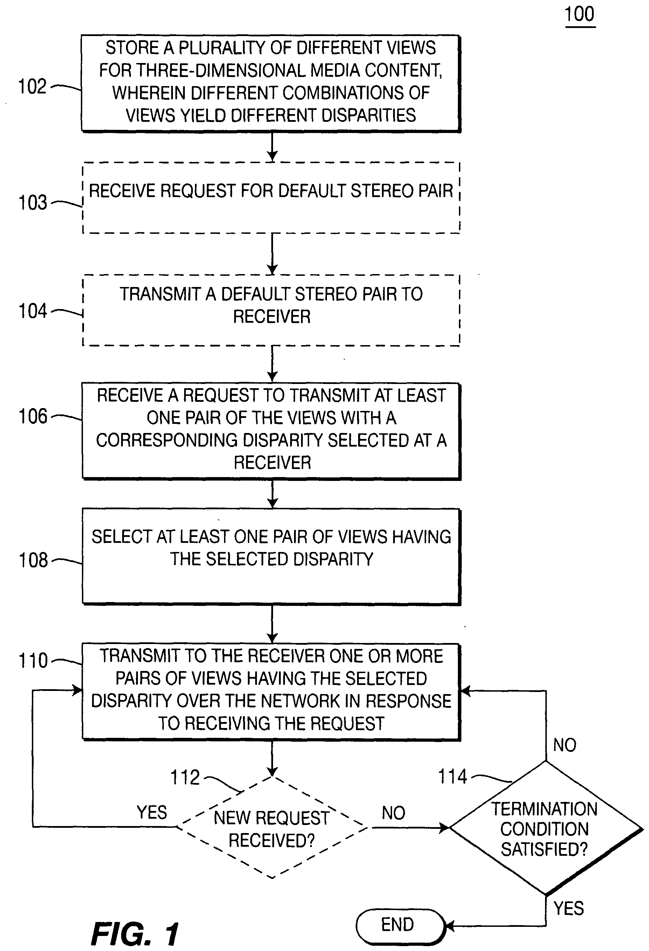

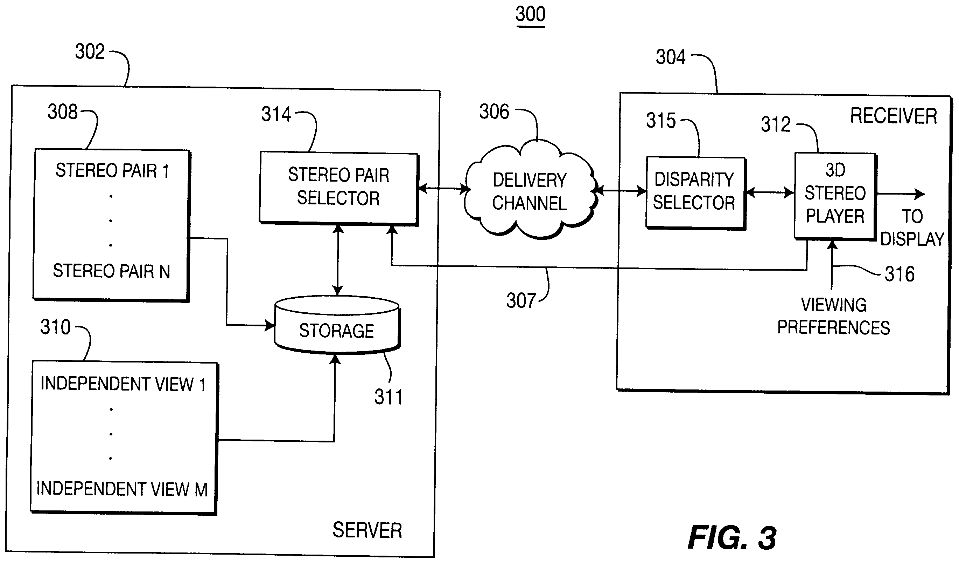

Referring now in specific detail to the drawings in which like reference numerals identify similar or identical elements throughout the several views, and initially to FIG. 1, a method 100 for delivering three-dimensional content over a network in accordance with exemplary embodiments of the present invention is described. In addition, reference is also made to FIG. 3 illustrating a system 300 for delivering three-dimensional content to permit ease of understanding of method 100. System 300 can include a server 302 and a receiver 304, which can communicate across a delivery channel 306. Delivery channel 306 can be implemented using variety of approaches and mediums, as understood by those of ordinary skill in the art. For example, delivery channel 306 can be implemented as part of a unicast or multicast network using the internet. In addition, delivery channel 306 can be an optical channel in an optical broadcast network or a radio frequency channel in a satellite broadcast network. Further, delivery channel 306 can be implemented in a cable service provider broadcast or two-way data network and the like. Server 302 can include a storage device 311 which can store a set of stereo pair views 308 and/or independent views 310. Different combinations of the views yield different disparities. In turn, receiver 304 can comprise a 3D stereo player 312, which can be configured to play 3D video content and to receive viewing preferences 316 from a user. Moreover, receiver 304 can transmit viewing preferences to the server 302 via channel 306 while server 302, in response, can transmit one or more view pairs having different, corresponding disparities. Alternatively, the server 302 can broadcast a plurality of views or view pairs to several receivers and the selection of view pairs can be made at the receiver 304. In yet another feature, the receiver 304 can transmit viewing preferences to the server 302 through a separate back channel 307. It should be understood that all system elements disclosed herein can be implemented on dedicated hardware or the system elements can be implemented in software layered over a hardware platform, comprising a processor and a program storage device. System elements can also be implemented using an application program interface and an operating system, as understood by those of ordinary skill in the art.

Returning to method 100, method 100 can begin at step 102 in which the server 302 stores a plurality of different views for the same three-dimensional media content. For example, the server 302 can store M independent views 310 in storage device 311 so that, in response to a user-request, they can subsequently be combined and/or interpolated to generate a pair with a desired disparity in accordance with user-preferences. Alternatively or additionally, server 302 can combine and/or interpolate different, multiple left and right views for video content to generate pairs having different disparities and the generated pairs can be stored in storage device 311. For example, the generated pairs can correspond to different (N) stereo pairs 308 stored at the server 302. In this scenario, the receiver 304 can select any one or more stored pairs 310 for transmission from the server 302 on delivery channel 306.

Optionally, at step 103, the server 302 can receive a streaming request for a default stereo pair from the receiver 304. The request can simply reference a "default" or can specify a desired disparity for the default stereo pair. Further, the request can be transmitted over back channel 307.

Optionally, at step 104, the server can transmit a default stereo pair of views to a receiver. This step is useful in an exemplary embodiment in which the user can request a pair having a different disparity based on the default pair. For example, the user can indicate to the receiver 304 that a pair having a higher or a lower disparity in relation to the default pair should be transmitted by the server. It should be noted that the default stereo pair can be broadcast to several receivers through delivery channel 306. In this scenario, the user-request (or receiver-request) for alternative views, described in more detail below, can be transmitted to the server via back channel 307. For example, if the default stereo pair is broadcast via satellite, the back channel 307 can be a hardwire or optical channel connected to a wide area network such as the Internet or some other service provider network.

At step 106, the server 302 can receive a request to transmit at least one pair of the views with a corresponding disparity selected at a receiver. For example, selection of a particular pair of views can be made upon system startup at a receiver. Additionally, selection of a particular pair of views can be made by a user at the receiver. Further, selection of the pair of views can be based on a default pair of views. For example, the request can include an indication that the server should transmit a view pair having more or less disparity than the default pair. Moreover, in a streaming scenario, switching between different stereo pairs could happen on-the-fly, simply by sending a new request to the server. The new requests for on-the-fly switching can indicate that the server should transmit one or more pairs of views that have a disparity that is greater than or less than any previous pair transmitted by the server, such as the last pair transmitted by the receiver. In addition, in a scenario in which the receiver downloads three-dimensional video content as opposed to receiving streaming content, the appropriate stereo pair can be requested at the beginning of the download; alternatively, several stereo pairs could be requested for download to provide several viewing options. It should also be noted that a "selected disparity," as employed herein, can correspond to a selected disparity range. For example, in the download scenario, a user can request a range of disparities and the server can provide several pairs of views have disparities within the specified range. In any scenario described here, as noted above, the request can be received along a back channel 307.

At step 108, the server 302 can select the pair of views having the selected disparity. For example, as mentioned above, the server 302 can generate different pairs of views 308 having different disparities prior to receiving a request from the receiver 304. Here, in response to receiving a request, the pair selector 314 in server 302 can select the requested pairs of views for transmission to the receiver 304. Alternatively or additionally, the pairs can be generated on-the-fly in response to user requests. For example, receiver 304 can transmit a request for one or more pairs of views that has more or less disparity than the default pair of views. Further, receiver 304 can transmit a request for one or more pairs of views having specified disparities in accordance with user-preferences. In response to receiving the request, the pair selector 314 can generate the requested pair or pairs for transmission to the receiver 304 by "selecting," at step 108, the pair or pairs of views having the selected disparity from the independent views 310 stored in storage device 311.

At step 110, in response to receiving the request from the receiver 304, the server 302 can transmit to the receiver 304 one or more pairs of views having the selected disparity over the network.

Optionally, at step 112, the server 302 can determine whether a new request for pair transmission has been received from the receiver 304. If a new request has been received, then the method can proceed to step 110 in which a new one or more pairs of views corresponding to the disparity indicated in the request are transmitted to the receiver 304. Alternatively, if the corresponding pair is not stored, then the method can proceed to step 108, in which the pair having the indicated disparity can be generated. The new request, can, for example, be part of an on-the-fly switching scheme discussed above. Otherwise, the method can proceed to step 114 in which the server 302 determines whether a termination condition is satisfied. For example, a termination condition can correspond to completion of transmission of all content in a download scenario. In a streaming scenario, a termination condition can correspond to a transmission of all content, such as video-on-demand content, or it can correspond to the receiver being in a shut-down state. If the termination condition is satisfied, then the method can end. Otherwise, the server can continue to transmit the one or more pairs of views having corresponding disparities in accordance with step 110.

Method 100 permits a viewer to customize the three-dimensional viewing experience in accordance with his or her preferences when streaming or downloading video content. Further, the method is economical in that pair generation is conducted at a server, thereby permitting the use of simple, low-complex receivers by a large number of customers serviced over a network.

It should be understood that method 100 can be implemented in a variety of ways as understood by those of ordinary skill in the art. For example, implementations can vary with respect to stereo pair creation and storage, stereo pair/disparity selection and coding of the three-dimensional content. Exemplary variations are described herein below.

### Stereo Pair Creation

In accordance with various exemplary implementations of the present invention, generation of pairs of views, as discussed above with respect to steps 102 and 108, can be performed in several different ways. For example, according to one exemplary embodiment, a Multi-view 3D content approach can be employed to generate the pairs of stereo views. This approach generates the 3D video content using a multi-view system utilizing either multiple cameras for live action content or multiple renderings for computer generated content. Therefore, generating the different stereo pairs can simply comprise pairing different generated views such that each pair has a different disparity. This approach offers the best video quality, but also has the highest content creation burden.

Another approach that can be employed to perform step 102 or step 108 includes 2D content creation and view interpolation. Here, only 2D video content is employed and interpolated to generate multiple views, optionally with some additional information such as depth data. While this approach greatly simplifies the content creation process, it entails complex, time consuming manual video processing for view interpolation. It might also provide lower quality than true multi-view content given that only one 2D view is available for the interpolation.

According to other exemplary aspects of the present invention, step 102 or step 108 can be performed using 3D stereo content creation and view interpolation. In this approach, 3D stereo content is interpolated to artificially generate multiple, different views. By using a single 3D stereo pair, content creation is greatly simplified compared to the true Multi-view 3D content approach. This approach does not reach the same quality level as multi-view 3D content creation, but it improves on that of the 2D content creation quality level. And for the stereo pair, this approach provides the same quality as the multi-view case.

Multi-view 3D content creation and view interpolation is another approach that can be employed to generate different views at step 102 or step 108. Here, Multi-view 3D content, described above, is interpolated to generate additional, different views. By adding view interpolation to multi-view 3D content creation, it is possible to reduce the complexity of the content creation process at the expense of slightly reduced image quality and additional cost for the view interpolation.

### Storage

In accordance with exemplary implementations, storage of views, as discussed above with respect to step 102, can be performed by the server in a variety of ways. The manner in which the views are stored can be selected based on complexity and capacity constraints.

As discussed above, at step 102, server 302 can employ stereo pair-based storage. In this mode, full pairs of left and right views, such as pairs 308, are stored. Thus, switching to a new disparity simply comprises switching to a new stored pair. While this mode requires the lowest complexity, it also requires the most storage, as different stereo pairs could actually share one of the two views.

Alternatively or additionally, views can be stored at step 102 in server 302 independently in accordance with a view-based storage approach. In this mode, several different views, such as views 310, are stored independently and full stereo pairs are generated on-the-fly based on the requested disparity. This approach increases complexity but minimizes space requirements and permits sending 2D video. In a particular embodiment, a single left view L (base view) and multiple right views (additional views) {R₁,...,R_{N}} can be stored at step 102; stereo pairs can be formed at step 108 by combining the left view with each right view (L,Rₙ).

### Video Coding

Transmission of one or more pairs of views at step 110 can be implemented by the server using many different encoding strategies. Simulcasting provides one viable option for transmitting views at step 110. In accordance with simulcasting, each view is encoded in an independent video stream and transmitted to the receiver. This approach uses a greater amount of bandwidth, as the bandwidth used compared to 2D video is approximately doubled. However, it has low complexity because it does not require using new coding or post-processing algorithms. Additionally, because each view is encoded in an independent video stream, any combination of views is possible, potentially resulting in more disparity options for the same number of views. This approach supports either stereo pair- and view-based storage, and it is backward compatible with 2D content.

Another technique that can be employed at step 110 includes spatial interleaving. Here, two views are spatially interleaved together and then encoded as a single 2D stream. Thus, it uses the same amount of bandwidth as for regular 2D video. However, the approach also results in lower image quality because each view is down-sampled by a factor of two. For example, the view can be down-sampled in the horizontal dimension for a side-by-side spatial interleaving. Spatial interleaving has a lower encoding and decoding complexity than simulcast, but it can require additional post-processing on the receiver side to reconstruct the full resolution stereo pair. This approach only supports stereo pair-based storage and breaks compatibility with 2D only systems.

Multi-view Video Coding (MVC) can also be employed at step 110 to transmit views to receiver 304. In particular, the MVC standard can be utilized to encode different views available on the server 302. Depending on the encoding configuration, such as cross-view dependencies, this approach can achieve different tradeoffs between encoding efficiency (i.e. bandwidth use) and complexity. In accordance with exemplary aspects, when a base view and additional views are employed in accordance with the view-based storage approach discussed above, coding dependencies would only occur between the base view and the additional views, and not between additional views - this would permit sending only the base view and any single additional view. This approach supports both stereo pair- and view-based storage, albeit with fewer view combinations than simulcast, and it is backward compatible with 2D only systems. A particular MVC approach in accordance with an exemplary embodiment of the present invention is discussed more fully below.

It should be understood that other coding approaches can be employed at step 110. For example, the scalable video coding (SVC) standard can be employed to encode the views for transmission or, for systems with view interpolation at the receiver, a combination of 2D views and depth information can be employed to encode the views for transmission.

### Other Exemplary Disparity Selection Embodiments

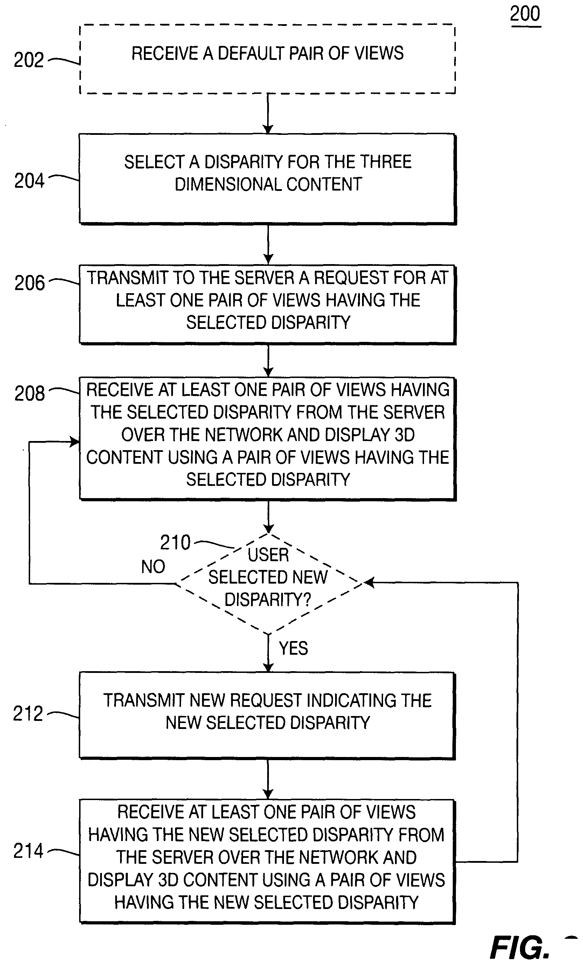

With reference now to FIG. 2 with continuing reference to FIGS. 1 and 3, a method 200 for receiving three-dimensional media content in accordance with one exemplary implementation of the present invention is illustrated. Method 200 can be performed concurrently and in conjunction with method 100.

Optionally, method 200 can begin at step 202, in which the receiver 304 receives a default stereo pair of views. The default stereo pair can correspond to the default pair described above with respect to step 104. As noted above, in exemplary embodiments, the default stereo pair can be broadcast to a plurality of receivers.

At step 204, the receiver 304 or a user can select a disparity for the three dimensional content in accordance with the descriptions provided above. For example, selection of a particular pair of views can be made upon system startup at a receiver. Additionally, a user can select a particular pair of views at the receiver. The receiver can also select the disparity based on viewing conditions. For example, the receiver can detect the screen size of the display device and can select a disparity appropriate to the screen size and viewing distance. The viewing distance parameter can be preset by a user or can simply be a default viewing distance parameter stored in software of the receiver device. Moreover, the selection process can be *direct* or *indirect.* In the direct mode, the receiver knows exactly which disparities are available on the server. Thus, the receiver can present the available, specified disparities to a user and the user can select a desired disparity. In the indirect mode, the receiver receives the default stereo pair and provides a user with the option of selecting a disparity that is greater than or less than the default stereo pair. Further, in the indirect mode, selection can be made iteratively by referencing the most recent stereo pair or stereo pairs received by the receiver. It should also be noted that a "selected disparity" can correspond to a selected disparity range, as discussed above.

At step 206, the receiver 304 can transmit to the server a request for at least one pair of views having the selected disparity. For example, in the direct mode, to request a stereo pair or a new stereo pair, the request can include an identifier (ID) of the left and right views to be sent. In the indirect mode, the request can include an indication of a higher or lower disparity with respect to any other pair or pairs of views previously transmitted by the server. As noted above, the pair selector 314 on the server side can select the appropriate pair of views to satisfy the request. Further, the request for a default pair can be made at step 206. As noted above, the request for the default pair can reference a "default" or can specify a desired disparity for the default stereo pair. It should also be noted that the direct mode puts much of the intelligence on the receiver side, simplifying the pair selector 314. The indirect mode entails using a more complex pair selector 314, but it permits adding or removing views from the storage without requiring any change on the receiver side. Further, it should be understood that the request can be the request described above with respect to step 106. As discussed above, the request, in certain exemplary embodiments, can be transmitted along a back channel 307.

At step 208, the receiver can receive at least one pair of views having the selected disparity from the server over the network and can display the three dimensional content using a pair of views having the selected disparity. The selected pairs can correspond to the selected pairs discussed above with respect to steps 108 and 110.

As stated above, the switching of views can be performed iteratively or on-the-fly by submitting new requests. Optionally, at step 210, the receiver can determine whether the user has selected a new disparity. If the user has not selected a new disparity, then the receiver can continue receiving the one or more pairs of transmitted by the server and maintain the current display of the content. Otherwise, the method can proceed to step 212.

Optionally, at step 212, the receiver can transmit a new request indicating the new selected disparity. The request can be comprised of any of the features discussed above with respect to step 206. For example, the request can specify that the new selected disparity is greater than or less than the disparity of at least one of the pair of views received. In addition, the request can specify one or more identifiers of specific pairs of views. Furthermore, the new request can include features of requests discussed above to steps 112 and 106.

At step 214, the receiver can receive at least one pair of views having the new selected disparity from the server over the network and can display the three-dimensional content using a pair of views having the new selected disparity. Thereafter, method 200 can proceed to step 210.

It should be understood that switching of views on-the-fly can occur at any time. For example, in a streaming scenario in which a user wishes to play three-dimensional content in accordance with a video-on-demand scheme, a video can be transmitted to the receiver as the default pair of views or as some receiver/user-specified pair of views. While the video is presented to the user, the user can iteratively adjust the disparity of the content displayed by using the on-the-fly switching feature discussed above until a desired disparity for the video is achieved while the video is playing. The adjustment can be implemented by permitting a user to select particular disparities and by transmitting a request for the pair of views having the selected disparity by using identifiers, as discussed above. Alternatively, the adjustment can be based on user-selection of a disparity that is greater or less than a disparity of a pair of views previously received at the receiver.

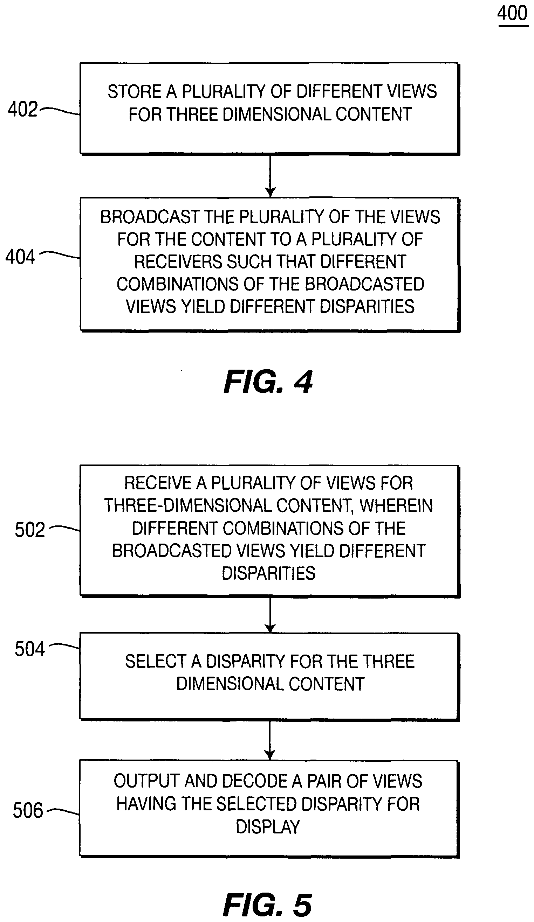

With reference now to FIG. 4 with continuing reference to FIGS. 1-3, an alternative method 400 for broadcasting three-dimensional video content in accordance with an exemplary embodiment of the present invention is illustrated. As opposed to sending views in an on-demand fashion, a plurality of different views or pairs of views for three-dimensional content can be broadcast and selected at receivers. Method 400 can be implemented by the server 302 of system 300, which has been described at length above. Method 400 can begin at step 402 in which the server 302 can store a plurality of different views for the same three-dimensional content. Step 402 can be equivalent to step 102, discussed above. For example, as discussed above, the server 302 can store different stereo pairs 308 having different corresponding disparities in storage device 311. Alternatively or additionally, the server 302 can store independent views 310 in storage device 311. As noted above, different combinations of the independent views yield different corresponding disparities.

At step 404, the server 302 can broadcast a plurality of views to a plurality of receivers. For example, a plurality of stereo pairs and/or a plurality of independent views can be transmitted to a plurality of receivers over delivery channel 306, which is implemented in a broadcast network, as discussed above. Any broadcasted stereo pairs have different corresponding disparities. Similarly, any broadcasted independent views, for example at least three independent views, have different corresponding disparities when combined. In addition, the plurality of views can each be transmitted with a disparity indicator. For example, the disparity indicator can indicate a distance from a base view to permit a receiver to choose a pair of views have a desired disparity. The base view can be any view and an indicator can be a negative or positive value indicating that the distance is to the left or right of a base view. Alternatively, for example if stereo pairs are broadcast 308, the indicators can simply reference a particular disparity. Further disparity distances and particular values of disparities can be implemented using codes and a lookup table that is either transmitted with the three-dimensional content or is pre-stored at a receiver 304.

Referring now to FIG. 5, with continuing reference to FIGS. 1-4, a method 500 for receiving three-dimensional video content in accordance with an exemplary embodiment of the present invention is illustrated. Method 500 can be implemented at a receiver 304 and can complement method 400. Method 500 can begin at step 502 in which the receiver can receive a plurality of views for three dimensional content. The views received can be the same views broadcasted at step 404. For example, different combinations of the views yield different disparities for the same content. In addition, the views can correspond to different independent views 310 and/or different stereo pairs 308.

At step 504, the optional disparity selector 315 of receiver 304 can select a disparity for the three-dimensional content. For example, a pair of independent views or stereo pairs received can be appended with an indicator indicating that the pair of views or stereo pair is a default pair of views or stereo pair. Thus, the disparity selector 315 can be configured to use a lookup table either received with the content or pre-stored in the memory of receiver 304 to determine the default pair of views and output the default pair of views for display. In addition, the user can indicate to the receiver 304 that a pair of views having a higher or a lower disparity in relation to the default pair of views should be displayed. This selection/display process can be performed iteratively until a desired disparity is reached, for example, as discussed above with respect to steps 208-210 of FIG. 2. Alternatively or additionally, the user can simply specify and input a desired disparity in response to a prompt presented on the display device by the receiver. For example, the receiver can present the available, specified disparities to a user and the user can select a desired disparity. In either or both cases, in response to user-selection of a desired disparity, the disparity selector 315 can use a lookup table to determine/select the pair of views, from the plurality of views and/or stereo pairs received, that has the corresponding disparity selected by the user.

Furthermore, it should be noted that, as discussed above, selection of a particular pair of views can be made upon system startup at a receiver. The receiver can also select the disparity based on viewing conditions. For example, the receiver can detect the screen size of the display device and can select a disparity appropriate to the screen size and viewing distance. The viewing distance parameter can be preset by a user or can simply be a default viewing distance parameter stored in software of the receiver device.

At step 506, the receiver 304 can decode and output the pair of views having the selected disparity for display.

It should be understood that although methods 400 and 500 were described separately from methods 100 and 200 for ease of understanding, any one or more steps of methods 400/500 can be included with methods 100/200 and *vice versa.* For example, system 300 can perform methods 400/500 simultaneously with methods 100/200 in that methods 400/500 can be performed for a subset of receivers while methods 100/200 are performed for a different subset of receivers. Alternatively or additionally, methods 400/500 can be performed for certain three-dimensional content while methods 100/200 are performed for other three-dimensional content.

### Embodiments utilizing MVC

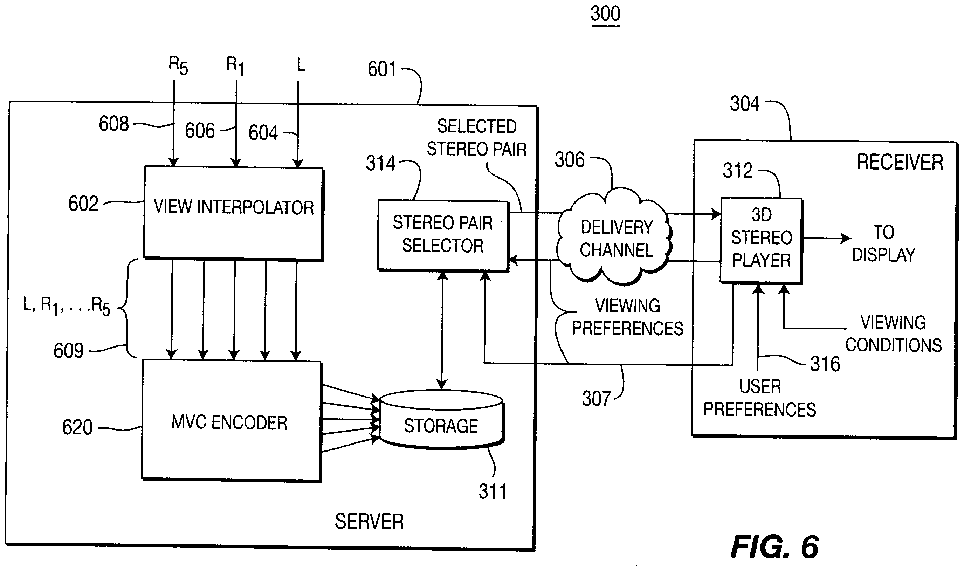

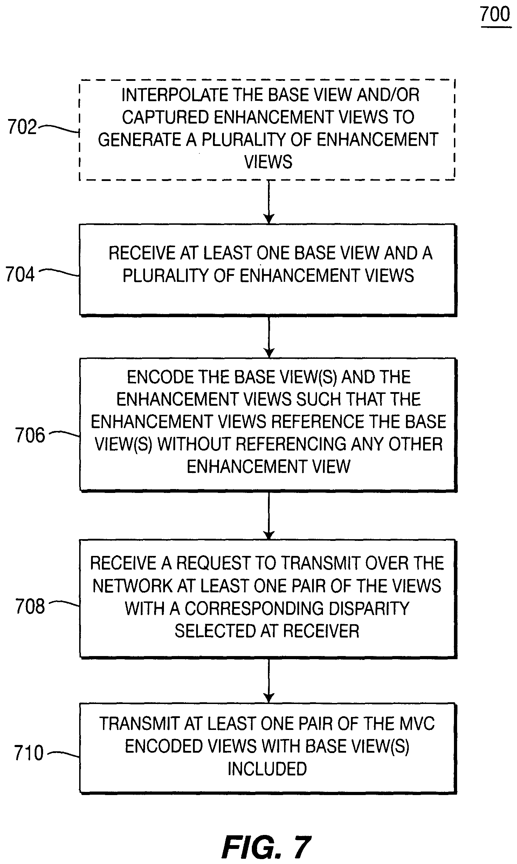

With reference now to FIGS. 6 and 7, with continuing reference to FIGS. 1 and 3, a system 600 and method 700 for delivering three-dimensional media content over a network by employing Multi-view Video Coding in accordance with exemplary embodiments of the present invention are illustrated, respectively. The MVC encoding methods and systems disclosed facilitate dynamic disparity switching when streaming or downloading three-dimensional video content. Here, MVC encoding is configured such that enhancement views reference only one or more base views and do not reference any other enhancement views. Base views should be understood to mean views that are transmitted from a server to a receiver regardless of which disparity a user or receiver has selected. However, it should be noted that enhancement views can be transmitted with base views to provide a disparity selected by a user.

For example, according to one exemplary implementation of the present invention, a single left view L and N right views {R₁,...,Rₙ} can be stored on the storage device 311 at server 302. The views can be encoded using the MVC standard, where the left view L would be the base view and the right views Rₙ would be the enhancement views, with no coding dependencies between right views. To send a particular stereo pair (L, Rₙ), the base view L and the enhancement view Rₙ would be combined into a single MVC stream and then streamed or downloaded. However, it should be noted that other approaches can be employed. For example, one could assume that two views, such as a default or base left view and a default or base right view will always be sent, and therefore both can be used as a reference to encode the remaining views.

As noted above, FIG. 6 illustrates a system 600 using an MVC encoding approach in accordance with an exemplary embodiment of the present invention. System 600 can include a storage device 311, a pair selector 314, a delivery channel 306 and a receiver 304, including a stereo player 312. Elements 311, 314, 306, 304, and 312 can perform exactly the same functions discussed at length above with respect to methods 100 and 200. Furthermore, system 600 is essentially the same as system 300 except in relation to how the plurality of different views is encoded for storage in storage device 311 and transmission over channel 306. Thus, any or all steps discussed above with respect to methods 100 and 200 can be implemented with corresponding elements in system 600. Moreover, any or all steps discussed above with respect to methods 100 and 200 can be combined with method 700, discussed herein below. Furthermore, MVC decoding features can be added to method 200 and receiver 304 to permit processing of views and/or pairs of views transmitted in accordance with method 700.

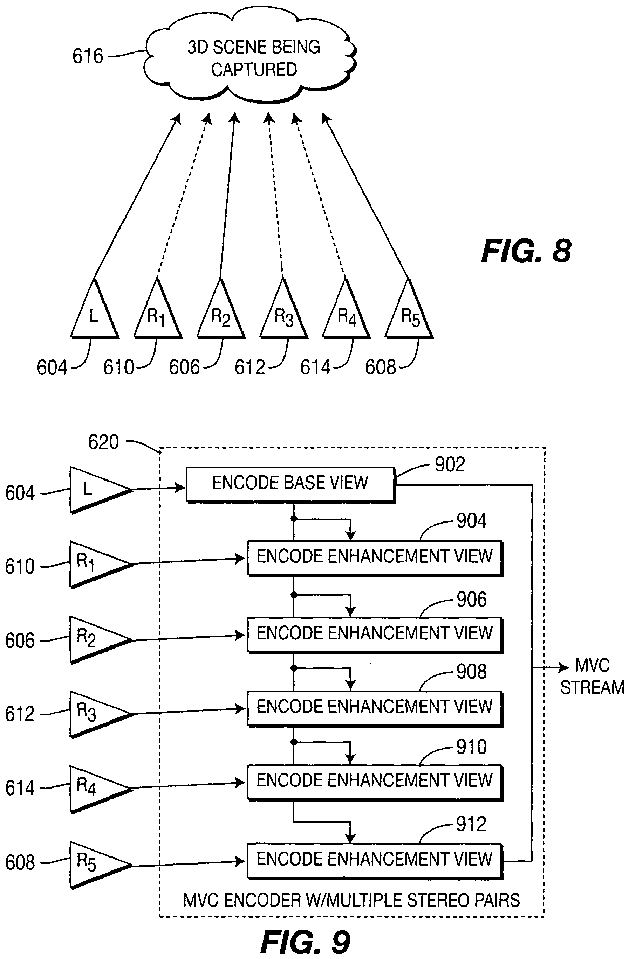

Method 700 can begin at optional step 702 in which an optional view interpolator 602 can interpolate the base view and/or captured enhancement views to generate a plurality of enhancement views. For example, a left captured left base view L 604, a captured right view R₂ 606 and a captured right view R₅ 608 can be input to the view interpolator 602 to generate views R₁ 610, R₃ 612 and R₄ 614 via interpolation of the base view 604, enhancement view 606, and/or enhancement view 608 for the captured three-dimensional scene 616, as shown, for example in FIG. 8. It should be noted that stereo pair (L 604, R₁ 610) has the lowest disparity while stereo pair (L 604, R₅ 608) has the highest disparity. Here, as opposed to capturing views L and {R₁,...,R_{N}} only the left view L and two right views R₂ and R₅ are captured. In FIG. 8, captured views are denoted by solid arrows while interpolated views are denoted by broken arrows. By limiting the numbers of views to be captured (or rendered, for computer generated content), the content creation process becomes simpler. Then, in order to still offer sufficient disparity configurations, the additional views are interpolated in the server using the "real" views as a reference, as described above. Many approaches can be used for the interpolation process, such as automatic approaches for speed or user-assisted approaches for quality. It should also be noted that although only one base view is shown here, one or more additional base views can also be input to view interpolator 602 for interpolation to generate enhancement views.

Once all the plurality of different views 609 are available, such as, for example, L and {R₁,...,R₅}, which can also include one or more other base views, they can be passed to the MVC encoder 620. However, it should be understood that the interpolator 602 is optional and the plurality of different views can be captured views that are passed on to the MVC encoder 620. As such, how the plurality of views is generated need not affect the MVC encoding process.

At step 704, the MVC encoder 620 can receive a base view and a plurality of enhancement views for the content. Further, as noted above, the MVC encoder 620 can also receive at least one other base view. Here, different combinations of one or more of the base views and the enhancement views yield different disparities

At step 706, the MVC encoder 620 can encode the base view(s) and the enhancement views such that the enhancement views reference the base view(s) without referencing any other enhancement view. For example, in the particular embodiment illustrated in FIGS. 6 and 8, the views can be encoded using the MVC standard such that the left view L 604 would be the base view and the right views Rₙ would be the enhancement views. Here, right views Rₙ are all encoded with respect to the base view and with no references between the right views Rₙ. FIG. 9 shows a block/flow diagram of the MVC encoder illustrating this encoding approach. For example, MVC encoder 620 can encode the base view 604 and enhancement views 610, 606, 612, 614 and 608 in accordance with encoding blocks 902-912, respectively, such that the enhancement views only reference the base view 604. However, other variations can be implemented.

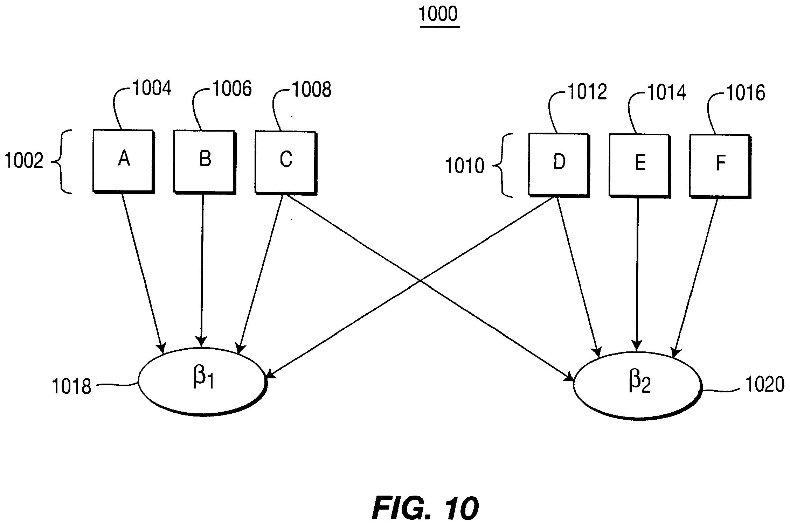

For example, with reference to FIG. 10, with continuing reference to FIGS. 6 and 7, a graph illustrating MVC encoding dependency relationships between enhancement views and base views in accordance with one exemplary embodiment of the present invention is provided. Graph 1000 includes a first set of enhancement views 1002 including enhancement views A 1004, B 1006 and C 1008, a second set of enhancement views 1010 including enhancement views D 1012, E 1014 and F 1016, and base views β₁ 1018 and β₂ 1020. Of course any of the views can be removed and more views of either type can be added in exemplary embodiments of present invention. The first set of enhancement views 1002, the second set of enhancement views 1010, and the base views β₁ 1018 and β₂ 1020 can be received by the MVC encoder at step 704, discussed above. Further, any pair-combination of any of the views can yield a different disparity for the three-dimensional content. As shown in the graph, the MVC encoder 620 can MVC encode enhancement views such that they reference both base views. For example, enhancement views C 1008 and D 1012 reference both base views β₁ 1018 and β₂ 1020 in graph 1000. In addition, the MVC encoder 620 can MVC encode enhancement views such that reference only one of the base views. For example, enhancement views A 1004 and B 1006 reference only base view β₁ 1018 while enhancement views E 1014 and F 1016 reference base view β₂ 1020. Moreover, as shown in graph 1000, enhancement views need not reference other enhancement views. While only two base views are described herein, the principles can easily be extended to any number of base views, as understood by those of ordinary skill in the art in view of the teachings disclosed herein.

It should also be noted that the MVC encoded views can be stored in storage device 311 as pairs and/or as independent views, as discussed above with respect to step 102 of method 100.

At step 708, the server 601 can receive a request to transmit over the network at least one pair of the views with a corresponding disparity selected at receiver 304. Step 708 can be performed in accordance with step 106 discussed at length above. For example, the request can include any and all features discussed above with respect to method 100. Alternatively, it should be noted that in certain embodiments that use MVC encoding, the request can simply be a request for the content, as discussed in more detail below.

At step 710, the server 601 can transmit at least one pair of the MVC encoded views to the receiver 304. For example, the step 710 can be implemented in accordance with step 110 discussed above with respect to method 100. For example, the transmitted pair or pairs of MVC encoded views can have the selected disparity indicated in the request. Alternatively, if the request is simply a request for content, the server 601 can select some or all of the MVC encoded views in response to receiving the request such that the receiver can have several options of utilizing different pairs having different disparities to display the three dimensional content.

It should be noted that in method 700, all one or more base views are transmitted to the receiver regardless of any disparities selected at the receiver 304. Thus, to transmit a pair of views having a specified disparity to the receiver 304, the pair selector 314 can select or generate pairs of views by choosing the appropriate enhanced view or views for combination with the one or more base views. For example, with reference to FIG. 8, the server 601 can transmit a default pair of views (L 604, R₂ 606) to the receiver 304 in accordance with step 104, discussed at length above. Thereafter, the receiver 304 can transmit a request to receive a pair of views having a lower disparity than the default pairs of views in accordance with step 106 and steps 204 and 206 discussed above with respect to methods 100 and 200. In response, the server 601 can combine and transmit views L 604 and R₁ 610. The pair (L 604, R₁ 610) has a lower disparity than the default pair. Alternatively, the receiver 304 can transmit a request to receive a pair of views having a greater disparity than the default pairs of views, in response to which the server 601 can transmit the pair of views (L 604, R₃ 612), which have a greater disparity than the default pairs of views. Furthermore, in accordance with a download scenario or a scenario where a user/receiver selects a disparity comprising a disparity range, one or more base views and one or more enhancement views can be transmitted to the receiver 304 from the server 601. For example, a selected disparity range can be serviced by transmitting two base views and one or more enhancement views such that different combinations of the base views and the enhancement views have disparities that fall within the specified range.

Having described preferred embodiments for a methods and systems for delivering three-dimensional media content, (which are intended to be illustrative and not limiting), it is noted that modifications and variations can be made by persons skilled in the art in light of the above teachings. It is therefore to be understood that changes can be made in the particular embodiments of the invention disclosed which are within the scope of the invention as outlined by the appended claims. While the forgoing is directed to various embodiments of the present invention, other and further embodiments of the invention can be devised without departing from the basic scope thereof.

## Claims

1. A method (100) implemented by a server (302) comprising the steps of:
- storing (102) a plurality of different views for three-dimensional media content, wherein each view of said plurality being recorded or generated from a viewpoint and wherein different stereo pair combinations of the views have different horizontal distances between viewpoints of said views;
- transmitting (104) a default stereo pair of views with a default horizontal distance between associated viewpoints;
- receiving (106) a request from a receiver including an indication specifying a range of distances as being above or below said default horizontal distance, said range being selected at the receiver;
- selecting (108) at least one stereo pair of the stored plurality of different views having a horizontal distance between their viewpoints within said range; and
- transmitting (110) the selected at least one stereo pair of views to the receiver over the network in response to receiving the request.

2. The method of claim 1 further comprising the step of:
- generating at the server, from stored views, a plurality of stereo pairs of views having different horizontal distances between the viewpoints from which said views are generated and storing said generated pairs of views prior said request from a receiver.

3. The method of claim 1 further comprising the step of:
- broadcasting the default stereo pair of views to a plurality of receivers.

4. The method of claim 1 further comprising the step of:
- receiving (112) a new request indicating a new range of distances selected at the receiver by specifying that the new selected range is above or below the horizontal distance between viewpoints of at least one of the stereo pairs of views transmitted.

5. The method of claim 4 further comprising the step of:
- receiving said request and new request over a back channel.

6. The method of claim 5 further comprising the step of:
- transmitting (110) at least one stereo pair of views having a horizontal distance between their viewpoints within said new range to the receiver in response to receiving the new request.

7. A method (200), implemented by a receiver (304), comprising the steps of:
- receiving (202) a default stereo pair of views representative of a three-dimensional media content, said pair of views having a default horizontal distance between the viewpoints from which said views have been recorded or generated;
- selecting (204) a range of distances as being above or below said default horizontal distance;
- transmitting (206) to a server a request including an indication specifying said selected range as being above or below said default horizontal distance; and
- receiving (208) the at least one stereo pair of views over the network.

8. The method of claim 7 further comprising the steps of:
- transmitting (212) a new request indicating a new selected range by specifying that the new selected range is above or below the horizontal distance between associated viewpoints of at least one of the stereo pairs of views received; and
- receiving (214), over the network, at least one pair of views having a horizontal distance between their viewpoints within the new range.

9. A system (300) comprising:
- a server (302, 601) implementing the method of one of claims 1 to 6, configured to store and broadcast a plurality of different stereo pairs of views for three-dimensional media content, wherein a view is recorded or generated from a viewpoint and wherein different stereo pair combinations of the views yield different horizontal distances between their viewpoints; and
- a receiver (304) implementing the method of claim 7 or 8, configured to receive a default stereo pair of views having a default horizontal distance between viewpoints from which said views have been recorded or generated, select a range of distances above or below said default horizontal distance viewpoints for the content and output a stereo pair of views having a distance between their viewpoints within said range for display.

## Patentansprüche

1. Verfahren (100), das durch einen Server (302) implementiert wird, wobei das Verfahren die folgenden Schritte umfasst:
- Speichern (102) einer Mehrzahl unterschiedlicher Ansichten für dreidimensionalen Medieninhalt, wobei jede Ansicht der Mehrzahl von einem Blickpunkt aus aufgezeichnet oder erzeugt wird und wobei unterschiedliche Stereopaarkombinationen der Ansichten zwischen den Blickpunkten der Ansichten unterschiedliche horizontale Entfernungen aufweisen;
- Senden (104) eines Standardstereopaars von Ansichten mit einer horizontalen Standardentfernung zwischen zugeordneten Blickpunkten;
- Empfangen (106) einer Anforderung, die eine Angabe enthält, die einen Bereich von Entfernungen als über oder unter der horizontalen Standardentfernung spezifiziert, von einem Empfänger, wobei der Bereich bei dem Empfänger ausgewählt wird;
- Auswählen (108) mindestens eines Stereopaars der gespeicherten Mehrzahl unterschiedlicher Ansichten mit einer horizontalen Entfernung zwischen ihren Blickpunkten innerhalb des Bereichs; und
- Senden (110) des ausgewählten mindestens einen Stereopaars von Ansichten an den Empfänger über das Netz als Reaktion auf den Empfang der Anforderung.

2. Verfahren nach Anspruch 1, das ferner den folgenden Schritt umfasst:
- Erzeugen einer Mehrzahl von Stereopaaren von Ansichten mit unterschiedlichen horizontalen Entfernungen zwischen den Blickpunkten, von denen aus die Ansichten erzeugt werden, bei dem Server aus gespeicherten Ansichten und Speichern der erzeugten Paare von Ansichten vor der Anforderung von einem Empfänger.

3. Verfahren nach Anspruch 1, das ferner den folgenden Schritt umfasst:
- Rundsenden des Standardstereopaars von Ansichten an eine Mehrzahl von Empfängern.

4. Verfahren nach Anspruch 1, das ferner den folgenden Schritt umfasst:
- Empfangen (112) einer neuen Anforderung, die einen neuen Bereich von Entfernungen angibt, die bei dem Empfänger durch Spezifizieren, dass der neue ausgewählte Bereich über oder unter der horizontalen Entfernung zwischen Blickpunkten mindestens eines der gesendeten Stereopaare von Ansichten liegt, ausgewählt werden.

5. Verfahren nach Anspruch 4, das ferner den folgenden Schritt umfasst:
- Empfangen der Anforderung und der neuen Anforderung über einen Rückkanal.

6. Verfahren nach Anspruch 5, das ferner den folgenden Schritt umfasst:
- Senden (110) mindestens eines Stereopaars von Ansichten mit einer horizontalen Entfernung zwischen ihren Blickpunkten innerhalb des neuen Bereichs an den Empfänger als Reaktion auf den Empfang der neuen Anforderung.

7. Verfahren (200), das durch einen Empfänger (304) implementiert wird, wobei das Verfahren die folgenden Schritte umfasst:
- Empfangen (202) eines Standardstereopaars von Ansichten, die einen dreidimensionalen Medieninhalt repräsentieren, wobei das Paar von Ansichten zwischen den Blickpunkten, von denen aus die Ansichten aufgezeichnet oder erzeugt worden sind, eine horizontale Standardentfernung aufweist;
- Auswählen (204) eines Bereichs von Entfernungen als über oder unter der horizontalen Standardentfernung;
- Senden (206) einer Anforderung, die eine Angabe enthält, die den ausgewählten Bereich als über oder unter der horizontalen Standardentfernung spezifiziert, an einen Server; und
- Empfangen (208) des mindestens einen Stereopaars von Ansichten über das Netz.

8. Verfahren nach Anspruch 7, das ferner die folgenden Schritte umfasst:
- Senden (212) einer neuen Anforderung, die einen neuen ausgewählten Bereich angibt, durch Spezifizieren, dass der neue ausgewählte Bereich über oder unter der horizontalen Entfernung zwischen zugeordneten Blickpunkten mindestens eines der empfangenen Stereopaare von Ansichten liegt; und
- Empfangen (214) mindestens eines Paars von Ansichten mit einer horizontalen Entfernung zwischen ihren Blickpunkten innerhalb des neuen Bereichs über das Netz.

9. System (300), das umfasst:
- einen Server (302, 601), der das Verfahren nach einem der Ansprüche 1 bis 6 implementiert, der dafür konfiguriert ist, eine Mehrzahl unterschiedlicher Stereopaare von Ansichten für dreidimensionalen Medieninhalt zu speichern und rundzusenden, wobei eine Ansicht von einem Blickpunkt aus aufgezeichnet oder erzeugt wird und wobei unterschiedliche Stereopaarkombinationen der Ansichten unterschiedliche horizontale Entfernungen zwischen ihren Blickpunkten liefern; und
- einen Empfänger (304), der das Verfahren nach Anspruch 7 oder 8 implementiert, der dafür konfiguriert ist, ein Standardstereopaar von Ansichten mit einer horizontalen Standardentfernung zwischen Blickpunkten, von denen aus die Ansichten aufgezeichnet oder erzeugt worden sind, zu empfangen, für den Inhalt einen Bereich von Entfernungen über oder unter der horizontalen Standardentfernung zwischen Blickpunkten auszuwählen und ein Stereopaar von Ansichten mit einer Entfernung zwischen ihren Blickpunkten innerhalb des Bereichs zur Anzeige auszugeben.

## Revendications

1. Procédé (100) mis en oeuvre par un serveur (302) comprenant les étapes suivantes :
- stockage (102) d'une pluralité de vues différentes pour du contenu multimédia tridimensionnel, où chaque vue de ladite pluralité est enregistrée ou générée à partir d'un point de vue et où différentes combinaisons de paires stéréo des vues présentent différentes distances horizontales entre les points de vue desdites vues ;
- transmission (104) d'une paire stéréo de vues par défaut avec une distance horizontale par défaut entre les points de vue associés ;
- réception (106) d'une requête d'un récepteur incluant une indication spécifiant une plage de distances comme étant au-dessus ou en dessous de ladite distance horizontale, ladite plage étant sélectionnée au niveau du récepteur ;
- sélection (108) d'au moins une paire stéréo de la pluralité stockée de vues différentes présentant une distance horizontale entre leurs points de vue dans ladite plage ; et
- transmission (110) de la au moins une paire stéréo de vues sélectionnée au récepteur sur le réseau en réponse à la réception de la requête.

2. Procédé selon la revendication 1, comprenant en outre l'étape suivante :
- génération au niveau du serveur, à partir de vues stockées, d'une pluralité de paires stéréo de vues présentant différentes distances horizontales entre les points de vue à partir desquels lesdites vues sont générées et stockage desdites paires de vues générées avant ladite requête d'un récepteur.

3. Procédé selon la revendication 1, comprenant en outre l'étape suivante :
- diffusion de la paire stéréo de vues par défaut vers une pluralité de récepteurs.

4. Procédé selon la revendication 1, comprenant en outre l'étape suivante :
- réception (112) d'une nouvelle requête indiquant une nouvelle plage de distances sélectionnée au niveau du récepteur en spécifiant que la nouvelle plage sélectionnée est au-dessus ou en dessous de la distance horizontale entre les points de vue d'au moins l'une des paires stéréo de vues transmises.

5. Procédé selon la revendication 4, comprenant en outre l'étape suivante :
- réception desdites requête et nouvelle requête sur un canal de retour.

6. Procédé selon la revendication 5, comprenant en outre l'étape suivante :
- transmission (110) d'au moins une paire stéréo de vues présentant une distance horizontale entre leurs points de vue dans ladite nouvelle plage au récepteur en réponse à la réception de la nouvelle requête.

7. Procédé (200) mis en oeuvre par un récepteur (304) comprenant les étapes suivantes :
- réception (202) d'une paire stéréo de vues par défaut représentative d'un contenu multimédia tridimensionnel, ladite paire de vues présentant une distance horizontale par défaut entre les points de vue à partir desquels lesdites vues ont été enregistrées ou générées ;
- sélection (204) d'une plage de distances comme étant au-dessus ou en dessous de la distance horizontale par défaut ;
- transmission (206) à un serveur d'une requête comprenant une indication spécifiant que ladite plage sélectionnée est au-dessus ou en dessous de ladite distance horizontale par défaut ; et
- réception (208) de la au moins une paire stéréo de vues sur le réseau.

8. Procédé de la revendication 7, comprenant en outre les étapes suivantes :
- transmission (212) d'une nouvelle requête indiquant une nouvelle plage sélectionnée en spécifiant que la nouvelle plage sélectionnée est au-dessus ou en dessous de la distance horizontale entre les points de vue associés d'au moins l'une des paires stéréo de vues reçues ; et
- réception (214), sur le réseau, d'au moins une paire de vues présentant une distance horizontale entre leurs points de vue dans la nouvelle plage.

9. Système (300) comprenant :
- un serveur (302, 601) mettant en oeuvre le procédé selon l'une des revendications 1 à 6, configuré pour stocker et diffuser une pluralité de paires stéréo différentes de vues pour du contenu multimédia tridimensionnel, où une vue est enregistrée ou générée à partir d'un point de vue et où différentes combinaisons de paires stéréo des vues produisent différentes distances horizontales entre leurs points de vue ; et
- un récepteur (304) mettant en oeuvre le procédé selon la revendication 7 ou 8, configuré pour recevoir une paire stéréo de vues par défaut présentant une distance horizontale par défaut entre les points de vue à partir desquels lesdites vues ont été enregistrées ou générées, sélectionner une plage de distance au-dessus ou en dessous desdits points de vue de distance horizontale par défaut pour le contenu et sortir une paire stéréo de vues présentant une distance entre leurs points de vue dans ladite plage pour affichage.
